# DEMANDE DE BREVET EUROPEEN

(11) **EP 2 129 130 A1**
(43) Date de publication de la demande: **02.12.2009**
(21) Numéro de dépôt: 09156758.6
(22) Date de dépôt: 30.03.2009
(51) Int. Cl.: H04N 7/24

(54) **Procédé de transmission simplifié d'un flux de signaux entre un émetteur et un appareil électronique**

(30) Priorité: 26.05.2008 FR 0853404
(71) Demandeur: THOMSON Licensing, 92100 Boulogne-Billancourt (FR)
(72) Inventeur: Henry, Jean-Baptiste, 35520 MELESSE (FR); Cottereau, Gaetan, 35200 RENNES (FR)
(74) Mandataire: Berthier, Karine

(57) **Abrégé**

La présente invention concerne essentiellement un procédé de transmission, via un réseau de communication utilisant un protocole de transmission de données par paquets, d'un flux d'échantillons multimédia entre un serveur émetteur et au moins un récepteur décodeur destiné à restituer ces données en temps réel, ce flux d'échantillons codant des images (I, P, B) de taille variable, **caractérisé en ce que** le procédé comporte notamment les différentes étapes consistant à :
- déterminer un même délai de transmission pour l'ensemble des échantillons du flux;
- déterminer un débit (39) de transmission pour chaque échantillon permettant l'envoi de cet échantillon dans le délai de transmission déterminé;
- émettre chaque échantillon depuis le serveur émetteur vers le récepteur décodeur en respectant le débit (39) de transmission propre à cet échantillon et le délai de transmission de l'ensemble des échantillons.

## Description

### Domaine technique de l'invention

La présente invention concerne un procédé de transmission d'un flux de signaux entre un serveur émetteur et un appareil électronique destiné à restituer ces signaux en temps réel. L'appareil électronique considéré est par exemple un décodeur de télévision numérique.

Le domaine de l'invention est, d'une façon générale, celui de la télévision numérique. L'invention sera plus particulièrement décrite dans le cadre de décodeurs recevant un flux de signaux via le réseau Internet, décodeurs qui seront désignés par la suite comme décodeurs IP, mais la mise en oeuvre du procédé selon l'invention n'est pas limitée à ce type de décodeurs.

Dans le domaine de la télévision numérique, des décodeurs de télévision sont utilisés pour accéder à un ensemble de chaînes de télévision qui sont transmises cryptées et qui sont décryptées au sein du décodeur. Les décodeurs de télévision sont des organes interfaces entre des systèmes de transmission de signaux de télévision, notamment de signaux de télévision numérique au format MPEG et DVB, et des moniteurs de visualisation.

Les moyens de transmission qui diffusent les émissions de télévision vers ces décodeurs sont soit des moyens de transmission aériens classiques, soit des câbles coaxiaux, voire optiques, soit des satellites de réémission qui desservent une région, soit encore le réseau Internet. Le décodeur comporte des moyens de réception pour recevoir les signaux émis et des moyens de formatage pour transformer les signaux reçus en des signaux applicables directement sur les organes de commande du dispositif de visualisation,

Le procédé selon l'invention s'applique de manière avantageuse an traitement des données, transmises dans un flux de signaux, qui doivent être restituées en temps réel ; de telles donnée sont émises en continu, de façon non périodique, dans le flux de signaux. D'une façon générale, la restitution, ou lecture, en est un principe utilisé pour la récupération des signaux de télévision sur Internet ; un tel principe de récupération, ou restitution permet la lecture d'un flux audio ou vidéo à mesure qu'il est diffusé ;

Ce principe de restitution est utilisé pour le visionnage des services de télévision, ou pour la visualisation de contenus accessibles en "vidéo à la demande" (VoD). Un tel principe de restitution s'oppose ainsi à la diffusion par téléchargement qui nécessite de récupérer l'ensemble des données d'un extrait vidéo avant de pouvoir le restituer.

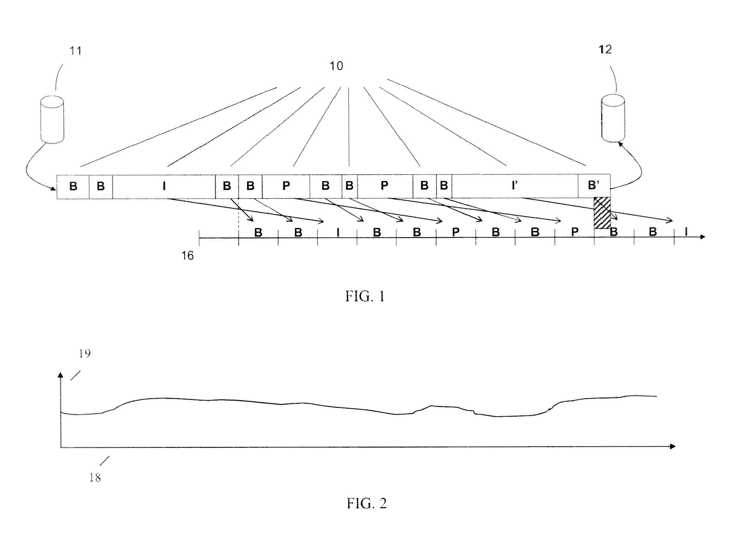

Dans ce contexte de restitution en temps réel, des paquets 10 (figure 1) de données vidéo sont émis par un serveur 11 chargé de les diffuser sur le réseau Internet jusqu'à leur réception par des dispositifs de réception 12 de type décodeurs IP, ou tout autre type de dispositif de restitution de données audio-vidéo connecté au réseau, par exemple un terminal mobile tel qu'un téléphone ou un assistant personnel.

Dans cet exemple, chaque paquet 10 code un échantillon multimédia tel qu'une séquence audio d'une durée déterminée ou une image. Dans ce dernier cas, il convient de distinguer trois types d'images distincts :
- les images I (intra) dont le codage ne dépend d'aucune autre image,
- les images P (prédictives) dont le codage dépend d'images reçues précédemment, et
- les images B (bi-prédictives) qui dépendent d'images reçues précédemment et/ou postérieurement.

### Arrière-plan technologique de l'invention

Les différentes images sont mémorisées, après réception, dans l'appareil électronique 12 destiné à les restituer. Au minimum, ces différentes images sont mémorisées dans une mémoire tampon, ou « buffer » en anglais.

Dans le cas d'un flux IPTV propre, le temps de mémorisation considéré est inférieur à la seconde. Dans d'autres exemples, les différentes composantes peuvent être mémorisées dans un module de mémoire de type disque dur, dans l'optique d'être décodées ultérieurement ; les applications associées à ce de mémorisation ne sont alors pas des applications de type "temps réel".

Afin d'optimiser le fonctionnement du système, le récepteur 12 doit décoder les paquets 10 avec un débit identique au débit de leur émission. En effet, si le serveur émetteur 11 transmet des paquet 10 un débit supérieur au débit de du récepteur 12, la mémoire tampon du récepteur est saturée par la quantité de paquets 10 à stocker en attente de leur décodage. Inversement, si l'émetteur transmet des paquets 10 avec un débit inférieur au débit de décodage du récepteur 12, la mémoire tampon de ce dernier reste en attente de données.

Par conséquent, le serveur émetteur 11 doit transmettre les paquets 10 de façon synchrone au traitement effectué par le décodeur 12. Pour permettre cette synchronisation, il est connu d'utiliser un protocole dénommé TS pour « Transport Stream » en anglais, qui date les informations transmises au moyen d'indicateurs dénommés PCR pour «Program Clock Reference » en anglais.

Un tel procédé présente l'avantage de permettre la transmission d'un flux de données avec un débit pratiquement constant, représenté sur la figure 2. Plus précisément, le débit 19 associé aux paquets 10 déjà décrits est représenté sur cette figure 2 en fonction d'un axe 18 de temps.

Ainsi, la transmission des paquets 10 est assurée si ce débit fixe peut être assuré et maintenu dans le réseau au cours de cette transmission.

La présente invention résulte de la constatation qu'un tel procédé peut entraîner des retards de restitution, également dénommée présentation, d'un échantillon lorsque sa transmission est précédée par la transmission d'un échantillon de taille importante.

Par exemple, comme montré sur la figure 1, une image B'émise après une image I' ayant requis un long délai d'émission peut être reçue en retard pour sa restitution - l'ordre de restitution des images, représenté selon l'axe 16, pouvant être inversée par rapport à leur ordre de transmission dans le protocole MPEG.

De ce fait, si la présentation des images transmises se déroule plus rapidement que leur transmission, notamment suite à la transmission d'une image de taille importante, le décodeur 12 finit par rester en attente d'une image B' pendant un délai représente par une zone hachurée.

### Description générale de l'invention

C'est un objet de l'invention de répondre au problème qui vient d'être mentionné. C'est pourquoi, l'invention concerne donc essentiellement un procédé de transmission, via un réseau de communication utilisant un protocole de transmission de données par paquets, d'un flux d'échantillons multimédia entre un serveur émetteur et au moins un récepteur décodeur destiné à restituer ces données en temps réel, ce flux d'échantillons codant des images de taille variable, **caractérisé en ce que** le procédé comporte notamment les différentes étapes consistant à :
- déterminer un même délai de transmission pour l'ensemble des échantillons du flux;
- déterminer un débit de transmission pour chaque échantillon permettant l'envoi de cet échantillon dans le délai de transmission déterminé;
- émettre chaque échantillon depuis l'émetteur vers le récepteur en respectant le débit de transmission propre à cet échantillon et le délai de transmission de l'ensemble des échantillons.

Outre les caractéristiques principales qui viennent d'être mentionnées le procédé selon l'invention peut également présenter une ou plusieurs des caractéristiques complémentaires ci-dessous, considérées individuellement ou selon toutes les combinaisons techniquement possibles :
- les étapes de fixer un débit de transmission maximal des échantillons à partir du serveur émetteur puis d'allouer une pluralité de délais de transmission pour l'envoi d'une image.
- l'étape d'indiquer au récepteur décodeur le nombre de délais de transmission requis pour l'envoi d'une image.
- l'étape de tester le débit de transmission accessible au serveur émetteur via le réseau de transmission.
- l'étape de traiter des données relatives à des signaux de télévision.
- l'étape de coder des données selon le protocole MPEG.
- l'étape de transmettre des paquets selon le protocole IP.

### Brève description des figures

D'autres caractéristiques et avantages de l'invention ressortiront clairement de la description qui en est donnée ci-dessous, à titre indicatif et nullement limitatif, en référence aux différentes figures annexées qui montrent :
- à la figure 1, déjà décrite, une représentation schématique d'un procédé de transmission et de restitution d'images vidéo selon l'art antérieur;
- à la figure 2, déjà décrite, un diagramme de la variation du débit de transmission d'un serveur émetteur selon l'art antérieur,
- à la figure 3 une première représentation schématique d'un procédé de transmission et de restitution d'images vidéo dans un premier exemple de mise en oeuvre du procédé selon l'invention ;
- à la figure 4, un diagramme de la variation du débit de transmission d'un serveur émetteur dans le premier exemple de mise en oeuvre du procédé selon l'invention ;
- à la figure 5, une seconde représentation schématique d'un procédé de transmission et de restitution d'images vidéo dans le premier exemple de mise en oeuvre du procédé selon l'invention ; et
- à la figure 6 un diagramme de la variation du débit de transmission d'un serveur émetteur dans un second exemple de mise en oeuvre du procédé selon l'invention.

### Description des formes de réalisation préférées de l'invention

Les éléments apparaissant sur différentes figures conservent, sauf précision contraire, les mêmes références.

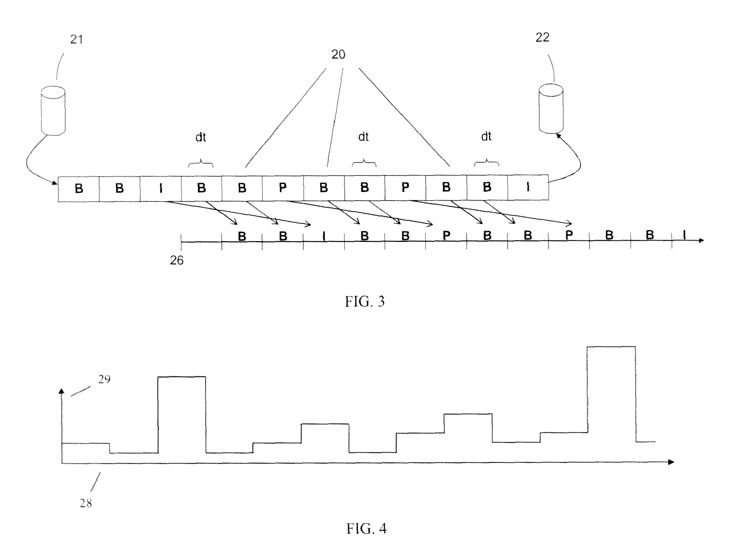

En référence à la figure 3 est représenté de façon schématique un procédé de transmission et de restitution d'images vidéo selon un premier exemple de mise en oeuvre de l'invention.

Plus précisément, des paquets 20 de données vidéo sont émis par un serveur 21 chargé de diffuser ces paquets 20 sur le réseau Internet jusqu'à leur réception par des de réception 22 de type décodeurs IP, ou tout autre type de dispositif de restitution de données audio-vidéo connecté au réseau, par exemple un terminal mobile tel qu'un téléphone ou un assistant personnel.

Dans cet exemple, chaque paquet 20 code un échantillon multimédia tel qu'une image I, P ou B, chaque paquet 20 étant transmis selon un même délai d'émission dt prédéterminé. Dans cette réalisation, ce délai d'émission est fixée à 40ms afin d'atteindre un débit de 25 échantillons par secondes.

En d'autres termes, une image I de taille importante est émise dans ce même délai dt qu'une image P ou B de taille inférieure, le serveur 21 adapte son débit de transmission pour émettre chaque image dans leur délai imparti dt.

Ainsi, comme montré sur la figure 4, le débit 29 d'émission varie fortement d'une image I (fort débit) à une image P (débit moyen) ou une image B (débit faible). A titre d'exemple et en considérant un flux MPEG2 à 3,5 Mbps, une image I peut avoir un débit de 10 Mbps, une image P un débit de 4 Mbps et une image B un débit de 1 Mbps.

Ces variations de débit présentent l'avantage de permettre la transmission des paquets 20 sans que la nature des images, notamment les images I de taille importante, n'entraîne de retard dans la présentation d'une image ultérieurement émise à l'image de grande taille.

De fait, comme montré sur l'axe 26 de la figure 3, la présentation des images est automatiquement effectuée dans le délai dt alloué à chaque image, ce délai dt étant identique au délai de présentation de chaque image.

Toutefois, la mise en oeuvre de cette première réalisation de l'invention peut être limitée dans un réseau où le débit accessible au serveur émetteur 21 est également limité. De fait, les caractéristiques physiques d'un réseau peuvent bloquer l'accès, pour un serveur, au débit nécessaire à la transmission d'un paquet 20 dans le délai fixé dt.

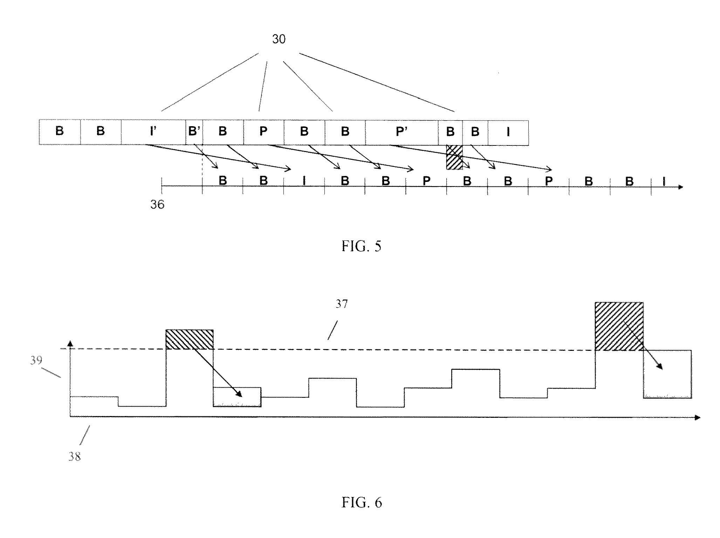

Dans ce cas, l'émission d'une image de taille importante dépasse le délai dt de transmission. Deux situations, représentées sur la figure 5 à l'aide des images l'et P', sont alors à considérer :
- Soit l'image I' est suivie d'une image B' dont la transmission peut être effectuée dans le délai dt de transmission diminué du dépassement temporel relatif à la transmission de l'image I'. Dans ce cas, le débordement temporel pour la transmission de l'image I' est compatible avec la réalisation décrite précédemment de l'invention.
- Soit l'image P' est suivie d'une image B" dont la transmission ne peut pas être effectuée dans le délai dt de transmission diminué du dépassement temporel relatif à la transmission de l'image P'. Dans ce cas, le débordement temporel pour la transmission de l'image P' n'est pas compatible avec la réalisation décrite précédemment de l'invention car elle aboutirait à retarder d'un délai (zone hachurée) la restitution de cette image B".

Pour remédier cette dernière situation, il est alors possible de limiter automatiquement la bande passante accessible au serveur émetteur comme montré sur la figure 6.

En imposant une telle limite 37, le serveur 21 peut allouer de nouveaux délais dt de transmission pour transmettre la partie d'une image qui n'a pas pu être transmise dans le premier délai dt.

Sur la figure 6, les données qui n'ont pas pu être transmises dans le délai dt de transmission sont représentées en hachurées, le nouveau délai dt alloué pour transmettre ces données restantes étant représenté en gris.

## Revendications

1. Procédé de transmission, via un réseau de communication utilisant un protocole de transmission de données par paquets (20), d'un flux d'échantillons multimédia entre un serveur émetteur (21) et au moins un récepteur décodeur (22) destiné à restituer ces données en temps réel, ce flux d'échantillons codant des images (I, P, B) de taille variable, **caractérisé en ce que** le procédé comporte notamment les différentes étapes consistant à :
- déterminer un même délai (dt) de transmission pour l'ensemble des échantillons du flux, ledit délai de transmission correspondant au temps de présentation de chaque échantillon;
- déterminer un débit (29, 39) de transmission pour chaque échantillon permettant l'envoi de cet échantillon dans le délai (dt) de transmission déterminé;
- émettre chaque échantillon depuis le serveur émetteur (21) vers le récepteur décodeur (22) en respectant le débit (29, 39) de transmission propre à cet échantillon et le délai de transmission (dt) de l'ensemble des échantillons.

2. Procédé selon la revendication précédente **caractérisée en ce qu'**il comprend les étapes supplémentaires de :
- fixer un débit (37) de transmission maximal des échantillons à partir du serveur émetteur (21),
- allouer une pluralité de délais de transmission pour l'envoi d'un échantillon.

3. Procédé selon la revendication 2 **caractérisé en ce qu'**il comprend l'étape pour le serveur émetteur (21) d'indiquer au récepteur décodeur (22) la pluralité de de transmission allouée pour l'envoi d'un échantillon.

4. Procédé selon la revendication 3 **caractérisé en ce qu'**il comprend l'étape de tester le débit (29, 39) de transmission accessible au serveur émetteur (21) via le réseau

5. Procédé selon l'une des revendications précédentes **caractérisé en ce qu'**il comprend l'étape de traiter des données relatives à des signaux de télévision.

6. Procédé selon l'une au moins revendication précédentes **caractérisé en ce qu'**il comprend l'étape de coder les images selon le protocole MPEG.

7. Procédé selon l'une au moins des revendications précédentes **caractérisé en ce qu'**il comprend l'étape de transmettre les paquets (20) selon le protocole IP.

8. Serveur (21) destiné à être relié à un réseau de communication utilisant un protocole de transmission de données par paquets (20) pour la transmission d'un flux d'échantillons multimédia vers au moins un récepteur décodeur (22) destiné à restituer ces données en temps réel, ce flux d'échantillons codant des images (I, P, B) de taille variable, **caractérisé en ce qu'**il comprend des moyens pour:
- déterminer un même délai (dt) de transmission pour l'ensemble des échantillons du flux, ledit délai de transmission correspondant au temps de présentation de chaque échantillon;
- déterminer un débit (29, 39) de transmission pour chaque échantillon permettant l'envoi de cet échantillon dans le délai (dt) de transmission déterminé;
- émettre chaque échantillon depuis le serveur émetteur (21) vers le récepteur décodeur (22) en respectant le débit (29, 39) de transmission propre à cet échantillon et le délai de transmission (dt) de l'ensemble des échantillons selon un procédé conforme à l'une des revendications précédentes.

9. Décodeur (22) relié à un réseau de communication utilisant un protocole de transmission de données par paquets (20) à recevoir un flux d'échantillons multimédia codant des images (I, P, B) de taille variable pour restituer ces en temps réel, **caractérisé en ce qu'**il comprend des moyens pour:
- décoder des échantillons transmis selon un même délai (dt) de transmission déterminé, ledit délai de transmission correspondant au temps de présentation de chaque échantillon, et avec un débit (29, 39) variable pour chaque permettant l'envoi de cet échantillon dans le de transmission déterminé;
- restituer chaque échantillon dans le même délai de restitution selon un procédé conforme à l'une des revendications 1 à 8.
